## Europäisches Patentamt

## European Patent Office

## Office européen des brevets

(11) Veröffentlichungsnummer: **0 031 576**
**B1**

(12) **EUROPÄISCHE PATENTSCHRIFT**

(45) Veröffentlichungstag der Patentschrift:
20.07.83

(51) Int. Cl.³: **H 01 F 41/00**

(21) Anmeldenummer: **80108131.6**

(22) Anmeldetag: **22.12.80**

(54) Verfahren zum Umgiessen eines elektrischen Gerätes.

(30) Priorität: **28.12.79 JP 170954/79**

(43) Veröffentlichungstag der Anmeldung:
**08.07.81 Patentblatt 81/27**

(45) Bekanntmachung des Hinweises auf die Patenterteilung:
**20.07.83 Patentblatt 83/29**

(84) Benannte Vertragsstaaten:
**AT BE DE FR NL SE**

(56) Entgegenhaltungen:
CH-A-399 584
DE-A-2 123 520
DE-A-2 333 241
FR-A-2 369 668
GB-A-962 222
GB-A-1 386 077
US-A-1 974 406
US-A-3 058 160
US-A-3 344 468
US-A-3 377 602
US-A-3 749 950

(73) Patentinhaber: **FUJI ELECTRIC CO. LTD.**, 1-1,
**Tanabeshinden, Kawasaki-ku, Kawasaki 210 (JP)**

(72) Erfinder: **Tokimitsu, Fujio, 2057-5 Nagasaka,
Yokosuka-shi, Kanagawa (JP)**

(74) Vertreter: **Mehl, Ernst, Dipl.-Ing., Postfach 22 01 76,
D-8000 München 22 (DE)**

ACTORUM AG

## Verfahren zum Umgiessen eines elektrischen Gerätes

Die Erfindung betrifft ein Verfahren zum Umgiessen von elektrischen Geräten, beispielsweise Giessharztransformatoren oder Spannungs- und Stromwandler. In derartigen Geräten sind perforierte, siebartige Abstandshalter zwischen Wicklungen und zwischen Wicklungen und der inneren Wand einer Giessform zum Festhalten der Wicklungen in vorbestimmten Abständen untereinander und bezogen auf die innere Wand der Giessform angeordnet und dient ein einen Füllstoff enthaltendes Giessharz als Giessmasse.

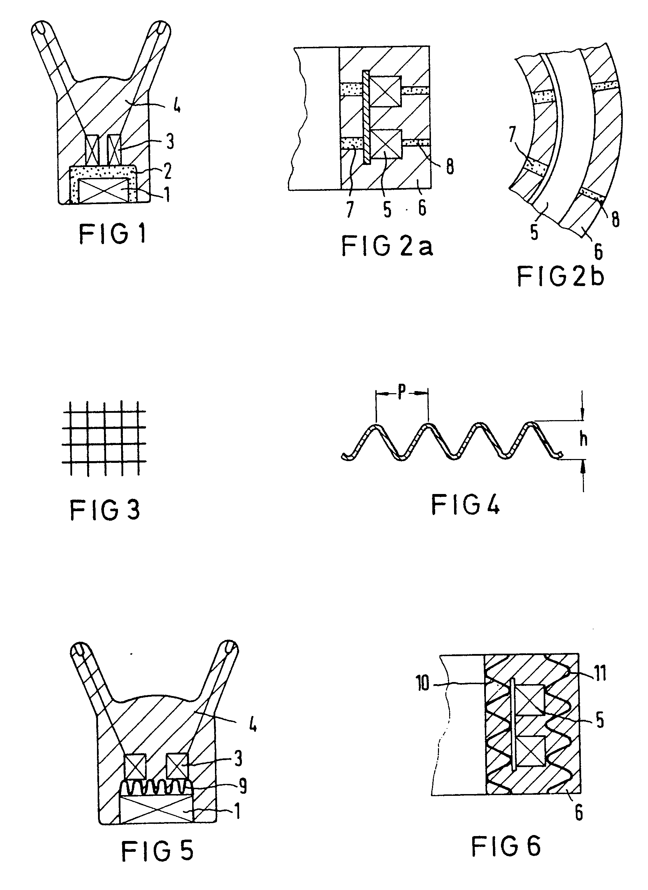

Die Abstandshalter bestimmten in mit Giessharz vergossenen elektrischen Geräten die Stärke der Giessharzschichten. Die Abstandshalter selbst dürfen keine Fehlstellen aufweisen oder irgendwie Risse in den Harzschichten verursachen. Darüber hinaus ist es zweckmässig, dass die Abstandshalter zur Armierung der Harzschichten beitragen. Der Einsatz derartiger Abstandshalter ist in Fig. 1 und 2 am Beispiel von herkömmlichen eingegossenen elektrischen Geräten erläutert.

Fig. 1 zeigt einen Ausschnitt aus einem Querschnitt durch einen vergossenen Spannungswandler. Bei dessen Herstellung wird zunächst eine Niederspannungswicklung 1 in Einbaulage gebracht und mit Giessharz umgossen, das die Niederspannungswicklung 1 dann mit einer Giessharzschicht 2 umgibt, während die Niederspannungswicklung 1 selbst mit Giessharz imprägniert wird. In einem darauffolgenden Arbeitsschritt wird eine Oberspannungswicklung 3 auf die Giessharzschicht 2 aufgewickelt, die dabei als Abstandshalter zwischen den Wicklungen dient. Schliesslich wird diese Anordnung in einem weiteren Giessvorgang mit Giessharz umgossen, das mit einer Giessharzschicht 4 die Niederspannungswicklungen 1 und die Oberspannungswicklung 3 einschliesst. Die erste Giessharzschicht 2 dient also zur Gewährleistung des nötigen Abstandes zwischen der Niederspannungswicklung 1 und der Oberspannungswicklung 3 und dient gleichzeitig als Wickelkörper für die Oberspannungswicklung 3. Dies an sich bekannte Verfahren erfordert jedoch zwei Giessvorgänge und ist dadurch in seiner Durchführung aufwendig. Die beiden zum Vergiessen erforderlichen Arbeitsgänge müssen darüber hinaus auch sehr sorgfältig aufeinander abgestimmt sein, um Inhomogenitäten und Risse in den Giessharzschichten auszuschliessen.

Die Fig. 2a und 2b zeigen Ausschnitte aus Querschnitten einer Hochspannungswicklung für einen Giessharztransformator. Bei der Herstellung dieser Wicklungsanordnung wird die Oberspannungswicklung 5 in einer nicht dargestellten Giessform gemäss einem aus der DE-A Nr. 2033734 bekannten Verfahren mit Giessharz umgossen. Eine Vielzahl von getrennt für sich gegossenen Abstandshaltern 7 und 8 sind in geeigneten Abständen zwischen dem inneren und dem äusseren Umfang der Oberspannungswicklung 5 und der inneren Wand der Giessform angeordnet, um die erforderlichen Abstände zwischen der Oberspannungswicklung 5 und den inneren Wänden der Giessform zum Formen einer Giessharzschicht 6 in der gewünschten Stärke zu gewährleisten, wobei die gewünschte Stärke durch unterschiedliche elektrische und mechanische Bedingungen bestimmt wird. Die Abstandshalter sind üblicherweise aus dem gleichen Giessharz geformt, der auch zum Giessen der Giessharzschicht 6 dient. Eine ziemlich verwickelte Aufgabe ist hierbei jedoch die Positionierung der einzelnen Abstandshalter zwischen der Wicklung und den Giessforminnenwänden. Diese Abstandshalter sind fest und starr und müssen daher mit sehr hoher Genauigkeit hergestellt sein. Dies ist erforderlich, um die Ausbildung unzulässiger Zwischenräume zwischen den Abstandshaltern und der Wicklung oder der Giessform auszuschliessen, bei deren Auftreten die Abstandshalter nutzlos wären.

Bei Herstellung mit Überschreitung der Sollmasse würden die Abstandshalter auf die Wicklung eine unzulässige Kraft ausüben, die als Stützkraft von der Innenwand der Giessform ausgeht oder die Abstandshalter würden nach dem Entformen einen Bruch der Giessharzschicht verursachen. Darüber hinaus können die in der zuletzt beschriebenen Art angeordneten Abstandshalter praktisch nicht zu einer wirksamen Armierung der Giessharzschicht beitragen und sind nicht in der Lage, die mögliche Entstehung von Rissen in der Giessharzschicht zu verhindern, die infolge stärkerer elektromagnetischer Belastung im Betrieb des Transformators auftreten können oder die infolge von unterschiedlichen Wärmeausdehnungen zwischen dem Giessharz und dem Metall oder aus anderen Gründen verursacht sind. Jeder Bruch, der sich in der Giessharzschicht entwickelt, trägt jedoch zu einer schnellen Zerstörung der Isolierung des elektrischen Gerätes bei.

Durch die DE-A Nr. 2333241 ist zum Vergiessen der Wickelköpfe von Statorwicklungen in Elektromotoren ein Verfahren bekannt, bei dem als Abstandshalter eine siebartige Folie eingesetzt ist. Diese Folie wird vor dem Aufsetzen von Lagerschilden auf die Wickelköpfe gelegt und mit diesen zusammen in die endgültige Lage gebracht. Dabei gewährleistet die siebartige Folie den isolationstechnisch notwendigen Abstand zwischen den Wickelköpfen und dem jeweils benachbarten Lagerschild. Die siebartige Folie kann jedoch nur wenig zur Armierung des Vergusskörpers beitragen und kann sich nicht an unterschiedlich grosse einzuhaltende Abstände anpassen. Darüber hinaus neigen relativ glatte und grossflächige Oberflächen der Folien zur Bildung von strukturellen und isolationstechnischen Schwachstellen in dem Giessharzkörper, so dass derartige Folien beim Einsatz in Transformatorwicklungsanordnungen aus Sicherheitsgründen eine Vergrösserung der Giessharzschichtdicken erfordern.

Der Erfindung liegt daher die Aufgabe zugrunde, die bei diesen bekannten Lösungen auftretenden Nachteile auszuschliessen und ein Verfahren anzugeben, durch das die Herstellung von vergossenen elektrischen Geräten vereinfacht ist und durch das die Ausbildung irgendwelcher Risse oder Fehlstellen in den Giessharzschichten auch bei Verwendung von Abstandshaltern verhindert ist.

Erfindungsgemäss wird dies dadurch erreicht, dass die Abstandshalter aus imprägniertem Glasgewebe hergestellt sind, das maschenartige Durchlässe zwischen den Gewebefäden aufweist, dass das Glasgewebe vor dem Aushärten der Imprägnierung in Wellen gelegt ist. Dabei ist gemäss einer vorteilhaften Weiterbildung der Erfindung vorgesehen, dass jeder der maschenartigen Durchlässe grösser ist als die grössten Teilchen des Füllstoffes in dem Giessharz.

Durch die US-A Nr. 3058160 ist es zwar auch schon bekannt, aus Pappe hergestellte Isolierteile für Transformatoren in Wellen zu legen, wobei der ebene Ausgangswerkstoff zur Erleichterung der Verformbarkeit zunächst durchnässt und nach Abschluss der Verformung wieder getrocknet wird. Nach diesem Verfahren hergestellte Isolierteile aus Pappe sind jedoch als Abstandshalter beim Vergiessen von Wicklungen mit Giessharz nicht einsetzbar.

Andererseits ist das erfindungsgemässe Verfahren sehr vorteilhaft, denn es ermöglicht ein sehr einfaches Herstellen von mit Giessharz umgossenen elektrischen Geräten, in denen die Abstandshalter ausser zur Fixierung der einzelnen Bauteile während des Herstellverfahrens gleichzeitig als Armierung für die Giessharzschicht dienen.

Ein Verfahren zur Herstellung der erfindungsgemässen Abstandshalter und ihre Verwendung werden anhand einer Zeichnung näher erläutert.

Fig. 1 und 2 zeigen Querschnitte durch auf bisher übliche Art und Weise hergestellte Wicklungsanordnungen.

Fig. 3 zeigt in stark vergrössertem Massstab ein Stück Glasgewebe, und

Fig. 4 den Querschnitt durch ein in Wellen gelegtes und imprägniertes Stück dieses Glasgewebes.

Fig. 5 und 6 sind Querschnitte durch unter Verwendung der erfindungsgemässen Abstandshalter hergestellte Wicklungsanordnungen.

Fig. 7 zeigt eine Einrichtung zur Herstellung der erfindungsgemässen Abstandshalter, und

Fig. 8 ist eine perspektivische Darstellung einer von einem erfindungsgemässen Abstandshalter umgebenen Wicklung.

Fig. 3 zeigt zur Herstellung von Abstandshaltern geeignetes Glasfasergewebe aus grauem Glas, bei dessen Herstellung unter Hitzeeinwirkung die Faseroberfläche behandelt wurde. Derartiges Glasgewebe ist in einer Vielzahl von Ausführungen mit unterschiedlichen Faserstärken, Spinnarten und Webarten handelsüblich erhältlich, aus denen eine geeignete Ausführung zur Verwendung in Abstandshaltern auszuwählen ist. Dabei ist von grösster Bedeutung, ein Glasgewebe zu wählen, das über seine gesamte Fläche mit verhältnismässig grossen maschenartigen Durchlässen zwischen den Kett- und Schussfäden ausgeführt ist. Dadurch ist sichergestellt, dass Teilchen des Füllstoffes, beispielsweise Silikatpuder, im Giessharz in der Lage sind, die maschenähnlichen Durchlässe während des Giessvorganges leicht zu passieren, wie in weiteren Einzelheiten weiter unten beschrieben ist. Da der im Giessharz vorgesehene Füllstoff gewöhnlich Teilchendurchmesser von ca. 25 bis 75 µm aufweist, ist es zweckmässig, Glasgewebe mit einer Maschenweite von etwa 1 mm² zu wählen.

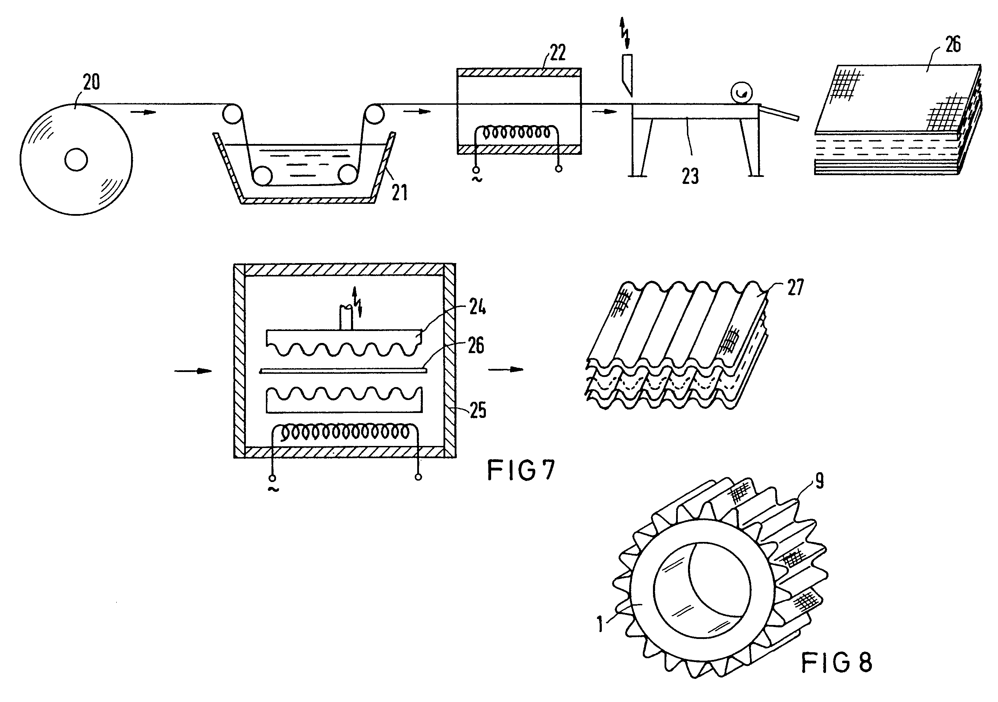

Das Glasgewebe wird in eine gewellte Form gemäss der Fig. 4 gebracht und in dieser Form durch Aushärten einer Imprägnierung in einem Verfahren gemäss Fig. 7 verfestigt. Die gewellte Form der Abstandshalter kann im Querschnitt ausser einer sinusähnlichen Kurve auch aneinandergereihte Dreiecke oder Trapeze darstellen. Die Höhe h jeder Welle ist so bestimmt, dass eine Giessharzschicht der gewünschten Stärke zwischen der Wicklung 1, 3 oder 5 eines elektrischen Gerätes oder zwischen der Wicklung 1, 3 oder 5 und der inneren Wand einer nicht dargestellten Giessform gewährleistet ist. Soll beispielsweise eine Giessharzschicht eine Stärke von etwa 6 mm haben, so ist auch die Höhe h etwa 6 mm zu wählen. Die einzelnen Wellen des gewellten Abstandshalters 9, 10 oder 11 sollen verhältnismässig kleine Wellenlängen P aufweisen, um die Druckfestigkeit des Abstandshalters zu erhöhen, denn zu grosse Wellenlängen P machen den Abstandshalter 9, 10 oder 11 durch von aussen einwirkende Kräfte leicht verformbar. Versuche wurden durchgeführt mit Abstandshaltern 9, 10, 11 mit unterschiedlichen Höhen h und Wellenlängen P. Diese Versuche ergaben, dass Abstandshalter 9, 10, 11 mit einer Wellenlänge P in der Grössenordnung der Höhe h eine sehr zufriedenstellende mechanische Festigkeit aufweisen.

Fig. 7 zeigt ein Ausführungsbeispiel für ein Herstellverfahren von Abstandshaltern 9, 10, 11. Von einer Rolle 20 wird Glasgewebe abgezogen und durch ein Bad 21 aus flüssigem Giessharz geführt, dessen Zusammensetzung weiter unten an einem Ausführungsbeispiel erläutert ist. Ein Tunnelofen 22 zur Teilaushärtung der Imprägnierung des Glasgewebes ist mit einer Heizung ausgerüstet. An den Tunnelofen 22 schliesst sich eine Schneideeinrichtung 23 an, auf der Bogen 26 von der imprägnierten Bahn des Glasgewebes abgeschnitten und anschliessend gestapelt werden. Eine Presseinrichtung 24 ist in einem Heizofen 25 angeordnet und mit gewellten Pressstempeln ausgerüstet.

Das Glasgewebe wird kontinuierlich von der Rolle 20 abgezogen und in dem Bad 21 imprägniert. Um die Adhäsion des Harzes in dem Bad 21 an dem Glasgewebe zu verbessern, ist es zweckmässig, letzteres entsprechend vorzubehandeln, beispielsweise mit einem Siliziumwasserstoff bindenden Mittel. Während das Glasgewebe durch den seine Imprägnierung nur teilweise aushärtenden Tunnelofen 22 läuft, verdampft Lösungsmittel aus dem Harz in dem Glasgewebe, und man erhält ein teilweise ausgehärtetes Gewebe mit einer Endaushärtetemperatur, die zwei oder drei mal höher ist als die Geliertemperatur des Harzes. Das Gewebe ist nun zwar nicht mehr weich, jedoch noch ausreichend flexibel. Die auf vorbestimmte Masse geschnittenen Bögen 26 weisen nach wie vor maschenähnliche Durchlässe in der gleichen Grössenordnung auf, wie das noch nicht imprägnierte Glasgewebe. Jeder der Bögen 26 wird schliesslich in den Heizofen 25 eingeführt und zwischen den heissen Pressstempeln der Presseinrichtung 24 gehalten und dabei bei ausreichend hoher Temperatur in die gewünschte Wellenform gepresst, wobei jeder Bogen 27 voll ausgehärtet wird. Voll ausgehärtete Bögen 27 werden dann in die Abmessungen geschnitten, die zur Verwendung von Abstandshaltern in elektrischen Geräten erforderlich sind.

Obgleich bei dem in Fig. 7 gezeigten Fertigungsverfahren Glasgewebe in Bögen geschnitten ist, nachdem es imprägniert und halb ausgehärtet ist, ist es auch möglich, die Gewebebahn unter Verwendung von Wellrollen kontinuierlich in Wellenform zu pressen und dabei die Imprägnierung vollständig auszuhärten.

Folgende Harzkompositionen haben sich bei Durchführung des erfindungsgemässen Verfahrens als brauchbar erwiesen:

*Epoxyd/Harz-Komposition:*

| Grundbestandteil: | Biphenol-A-Epoxydharz . . . . . . . . . . . . . . . . . . . | 100 | Gew.-Teile |
| Härter: | Potentielles Amin . . . . . . . . . . . . . . . . . . . . | 5 | Gew.-Teile |
| Lösungsmittel: | Methylcellulose . . . . . . . . . . . . . . . . . . . . | 200 | Gew.-Teile |

*Triazin/Harz-Komposition:*

| Grundbestandteil 1: | Mischung aus Bi- und Triazinharz . . . . . . . . . . . . . | 100 | Gew.-Teile |
| Grundbestandteil 2: | Novolack-Typ-Epoxydharz . . . . . . . . . . . . . . . | 30 | Gew.-Teile |
| Katalythärter: | Zinnoktylat 1 . . . . . . . . . . . . . . . . . . . . | 0,5 | Gew.-Teile |
| Lösungsmittel: | Methyläthylketon . . . . . . . . . . . . . . . . . . . | 100 | Gew.-Teile |

Die Verarbeitung des Harzes wurde folgendermassen ausgeführt: Das mit einem der Harzkompositionen imprägnierte Glasgewebe wurde bei 120° C etwa 10 min lang zur Verdampfung des Lösungsmittels getrocknet, wobei das Harz lediglich teilausgehärtet wurde. Anschliessend wurde das imprägnierte Glasgewebe unter Druck bei etwa 150° C 2 h lang gepresst, wobei das Harz voll ausgehärtet wurde. Gemäss einer anderen Möglichkeit wurde das Glasgewebe in 1 h bei 100° C halb ausgehärtet und bei 180° C über ebenfalls 1 h voll ausgehärtet.

Zur Gewährleistung einer bläschen- und spaltfreien Harzschicht mit einem teilentladungsfesten Abstandshalter ist es zweckmässig, das Glasgewebe in an sich bekannter Weise im Vakuum zu imprägnieren.

Die gewellten Abstandshalter 9, 10, 11 werden zwischen die Wicklungen 1, 3, 5 und zwischen den Wicklungen 1, 3, 5 und der inneren Wand der Giessformen angeordnet und gewährleisten dort die erforderlichen Abstände. In die so präparierte Giessform wird dann ein Giessharz eingefüllt, das einen Füllstoff enthält. Das Glasgewebe, aus dem die Abstandshalter geformt sind, ist soweit möglich, mit einem Harz der gleichen Type imprägniert, wie zum Vergiessen des elektrischen Gerätes verwendet ist.

Die Fig. 5 und 6 zeigen Ausführungsbeispiele von elektrischen Geräten, die auf diese Art hergestellt sind. Fig. 5 zeigt dabei einen vergossenen Spannungswandler im Ausschnitt eines Querschnitts. Ein gewellter Abstandshalter 9 umfasst eine Niederspannungswicklung 1 und bildet einen Spulenkörper, um welchen eine Oberspannungswicklung 3 gewickelt ist. Die Niederspannungswicklung 1, der Abstandshalter 9 und die Oberspannungswicklung 3 sind gemeinsam von Harzschichten eingeschlossen. Die Herstellung dieses Gerätes erfordert ersichtlich lediglich einen einzigen Giessvorgang und ist dadurch einfacher als die Herstellverfahren für Geräte der in Fig. 1 dargestellten Art.

Fig. 6 ist Teil eines Querschnittes einer Hochspannungswicklung für einen Giessharztransformator. Gewellte Abstandshalter 10 und 11 sind zwischen der Hochspannungswicklung 5 und der Innenwand der nicht dargestellten Giessform angeordnet und die Hochspannungswicklung 5 ist zusammen mit den Abstandshaltern 10 und 11 in einem Arbeitsgang in einem einzigen Giessharzblock 6 vergossen.

Während die Fig. 5 und 6 die Abstandshalter im wesentlichen schematisch darstellen, ist in Fig. 8 deutlich erkennbar, wie die Wellen der gewellten Abstandshalter 9 sich parallel zur Achse der Wicklung 1 erstrecken, auf welche der Abstandshalter 9 aufgewickelt ist. Der Abstandshalter 9 kann auch auf der Innenseite der Wicklung angeordnet sein und den notwendigen Abstand zwischen zwei Wicklungen oder zwischen der Wicklung und einer inneren Wand einer Giessform einhalten.

Im Gegensatz zu bisher üblichen starren Abstandshaltern kann der erfindungsgemäss gewellte Abstandshalter verhältnismässig leicht gebogen werden und auf dem Umfang von Wicklungen angeordnet sein. Aus diesem Grund sind die Abstandshalter 9, 10, 11 bei der Herstellung von Giessharzgeräten wesentlich leichter zu verarbeiten als starre Abstandshalter.

Der Abstandshalter behält auch einen gewissen Grad an Flexibilität entlang der Höhe seiner Wellen und hält eine Wicklung in einer Giessform mit gleichmässiger Kraft über den gesamten Umfang und verhindert dadurch Verschiebungen der Wicklungen. Der Abstandshalter ist darüber hinaus sehr leicht in Giessformen einzuführen.

Das Glasgewebe, aus dem der Abstandshalter hergestellt ist, dient nach dem Vergiessen zur Armierung des Giessharzes und schützt dieses vor dem Reissen über einen weiteren Belastungsbereich infolge der beim Betrieb des elektrischen Gerätes in diesem auftretenden Kräfte. Sollte sich in der Giessharzschicht trotzdem ein örtlich eng begrenzter Riss entwickeln, verhindert der Abstandshalter die Weiterbildung dieses Risses und verhindert dadurch eine substantielle Verringerung der Isolierung des elektrischen Gerätes, so dass die Sicherheit der Funktion des Gerätes gewährleistet bleibt.

Das Giessharz wird beim Giessvorgang durch einen Einfüllstutzen in die Giessform eingeführt und fliesst frei durch die maschenartigen Durchlässe in dem die Abstandshalter formenden Glasgewebe und erreicht auf diese Art jede Ecke der Form. Dies gilt auch für den Füllstoff in dem Giessharz. Das heisst, der Abstandshalter wirkt nicht als ein Filter, der den Füllstoff zurückhält, sondern erlaubt diesem die maschenartigen Durchlässe in dem Glasgewebe frei zu durchdringen, so dass es möglich ist, einen Giessharzkörper zu formen, der vollkommen homogen die gesamte Giessform ausfüllt. Aus diesem Grund ist es sehr wichtig, zur Herstellung der Abstandshalter Glasgewebe mit maschenartigen Durchlässen zu verwenden. Beim Fehlen von derartigen maschenartigen Durchlässen verhindert das Glasgewebe den freien Durchtritt des Füllstoffes und blockiert dann mit dem Füllstoff den Giessvorgang. Eine weitere Folge des Zusetzens der maschenartigen Durchlässe mit Füllstoff ist eine unvollständige Füllung der Giessform mit Giessharz mit Bläschen in den Giessharzschichten. Selbst wenn keine Bläschen eingeformt würden, wäre es dabei ausgeschlossen, homogene Giessharzschichten herzustellen, weil der Füllstoff an dem Erreichen der entgegengesetzten Seite der Abstandshalter behindert wäre. Das hat unterschiedliche Giessharzschichten mit unterschiedlichen mechanischen Festigkeiten mit unterschiedlichen Wärmeausdehnungskoeffizienten zur Folge, so dass derartige Giessharzschichten schon beim Abkühlen der Giessmasse leicht reissen oder im Betriebszustand des elektrischen Gerätes beim Auftreten von Wärmebelastungen rissig werden.

Die erfindungsgemässe Anordnung der Abstandshalter wurde unter mechanischen und elektrischen Gesichtspunkten geprüft und die Prüfergebnisse wurden mit entsprechenden Werten von bisher bekannten Anordnungen verglichen. Die Ergebnisse sind in der folgenden Tafel zusammengestellt. Alle Probestücke I bis IV waren 10 mm breit, 150 mm lang und 4 mm stark. Das Probestück I war aus einem festen Körper durch Giessen aus Biphenol A als Giessharz und Silikat als Füllstoff hergestellt. Das Probestück II war unter Einschluss eines erfindungsgemässen Abstandshalters hergestellt. Der Abstandshalter bestand aus mit Epoxydharz imprägniertem Glasgewebe, das in Wellenform gepresst und dessen Imprägnierung anschliessend ausgehärtet wurde. Dabei diente als Giessharz die gleiche Harzart wie bei dem Probestück I. Das Probestück III war durch die gleiche Folge von Arbeitsgängen wie beim Probestück II präpariert, wobei jedoch zur Imprägnierung des Glasgewebes ein Triazinharz verwendet wurde. Das Probestück IV war ebenfalls durch Wiederholung der Arbeitsgänge wie beim Probestück II präpariert, wobei jedoch zur Erzielung einer bläschenfreien Imprägnierung des Glasgewebes die Imprägnierung im Vakuum erfolgte.

Tabelle

| Probestück | I | II | III | IV |
|---|---|---|---|---|
| Biegefestigkeit (MN/m²) | $140 \pm 10$ | $180 \pm 10$ | $180 \pm 10$ | $180 \pm 10$ |
| Elastizitätsmodul (MN/m²) | $8000 \pm 300$ | $10\,000 \pm 500$ | $11\,000 \pm 500$ | $10\,000 \pm 500$ |
| Kurzzeit-Spannungsfestigkeit (MV/m) | $45 \pm 3$ | $43 \pm 3$ | $43 \pm 3$ | $44 \pm 3$ |
| Teilentladungsbeginn ($kV_{eff}$) | — | 6 | 6 | 12 |
| Teilentladungsende ($kV_{eff}$) | — | 5 | 4,5 | 10 |

Aus der Tabelle ist klar ersichtlich, dass die Verwendung der erfindungsgemässen Abstandshalter bei der Herstellung von Giessharzschichten zu höheren mechanischen Festigkeiten führt als die bisher hierfür bekannten Verfahren. Das gleiche gilt entsprechend auch für die elektrische Festigkeit.

Gemäss der Erfindung sind die Abstandshalter zwischen den Wicklungen oder zwischen den Wicklungen und den inneren Wänden einer Giessform angeordnet und gewährleisten die erforderlichen Abstände zwischen diesen Bauteilen, so dass es in vorteilhafter Weise möglich ist, die Anordnung der Abstandshalter erheblich einfacher und leichter anzubringen als dies nach den bekannten Verfahren möglich ist.

Die Abstandshalter gemäss der vorliegenden Erfindung sind nicht nur bei paarweise zueinander angeordneten Wicklungen einsetzbar, sondern sind darüber hinaus auch brauchbar als Abstandshalter zwischen den Leitern von Ausleitungen und den Giessformen für diese Ausleitungen.

## Patentansprüche

1. Verfahren zum Umgiessen eines elektrischen Gerätes, in dem perforierte, siebartige Abstandshalter (9, 10, 11) zwischen Wicklungen (1, 3, 5) und zwischen Wicklungen (1, 3, 5) und der inneren Wand einer Giessform zum Festhalten der Wicklungen (1, 3, 5) in vorbestimmten Abständen untereinander und bezogen auf die innere Wand der Giessform angeordnet sind und ein einen Füllstoff enthaltendes Giessharz als Giessmasse dient, dadurch gekennzeichnet,
— dass die Abstandshalter (9, 10, 11)
— durch Imprägnierung eines Abschnittes von maschenartige Durchlässe zwischen den Gewebsfäden aufweisenden Glasgeweben mit Kunstharz,
— durch Inwellenlegen (h, P) des Glasgewebes, und
— durch Aushärten des Kunstharzes hergestellt sind.

2. Verfahren nach Anspruch 1, dadurch gekennzeichnet, dass jeder der maschenartigen Durchlässe grösser als die grössten Teilchen des Füllstoffes ist.

## Claims

1. A process for encapsulating an electric device, in which perforated, screen-like spacers (9, 10, 11) are arranged between windings (1, 3, 5) and between the windings (1, 3, 5) and the inner wall of a casting mould, in order to retain the windings (1, 3, 5) at predetermined distances from one another and from the inner wall of the casting mould, and in which a casting resin containing a filler serves as a casting mass, characterised in that the spacers (9, 10, 11) are produced by impregnating with synthetic resin a section of glass fabric, which has passages in the form of a mesh between the fibres of the fabric, corrugating the glass fabric, and hardening the synthetic resin.

2. A process as claimed in claim 1, characterised in that each of the passages forming a mesh is larger than the largest particles of the filler.

## Revendications

1. Procédé pour enrober un appareil électrique, dans lequel des écarteurs perforés du type d'un tamis (9, 10, 11) sont disposés entre les enroulements (1, 3, 5) et entre les enroulements (1, 3, 5) et la paroi intérieure d'un moule de coulée pour maintenir les enroulements (1, 3, 5) à des distances prédéterminées les uns des autres et par rapport à la paroi intérieure du moule de coulée, et une résine de coulée contenant une charge sert de masse de coulée, caractérisé par le fait que les écarteurs (9, 10, 11) sont fabriqués:
— par imprégnation, par une résine synthétique, d'une pièce de tissu de verre textile qui comporte des passages en forme de mailles entre les fils du tissu,
— par mise sous forme d'ondulations (h, P) du tissu de verre textile, et
— par durcissement de la résine synthétique.

2. Procédé suivant la revendication 1, caractérisé par le fait que chacun des passages en forme de mailles est plus gros que la particule de dimensions maximales de la charge.

FIG 1

FIG 2a

FIG 2b

FIG 3

FIG 4

FIG 5

FIG 6

FIG 7

FIG 8